# EUROPEAN PATENT APPLICATION

(11) **EP 2 477 045 A2**
(43) Date of publication of application: **18.07.2012**
(21) Application number: 12150895.6
(22) Date of filing: 12.01.2012
(51) Int. Cl.: G01V 1/147

(54) **Portable Device and Method to Generate Seismic Waves**

(30) Priority: 12.01.2011 US 201161431963 P
(71) Applicant: CGGVeritas Services S.A., 91300 Massy (FR)
(72) Inventor: Maxwell, Peter William, 91341 MASSY Cedex (FR); Preusser, Thomas, 91341 MASSY Cedex (FR); Jurok, Jason Alex, 91341 MASSY Cedex (FR)
(74) Representative: Callon de Lamarck, Jean-Robert

(57) **Abstract**

A portable seismic source (40) for generating a seismic wave in the ground. The portable seismic source includes a casing (42) containing an impulsive energy device; a base plate (46) configured to be placed on the ground (48); and a stabilizing foot mechanism (44) configured to be provided between the casing and the base plate. The stabilizing foot mechanism includes a stabilizer which is fixed relative to the casing and configured to be placed on the base plate and a stanchion that is configured to move relative to the stabilizer and to enter through the stabilizer and apply a force on the base plate when energy is applied from the impulsive energy device.

## Description

### BACKGROUND

### TECHNICAL FIELD

Embodiments of the subject matter disclosed herein generally relate to methods and systems and, more particularly, to mechanisms and techniques for generating seismic waves.

### DISCUSSION OF THE BACKGROUND

During the past years, the interest in developing new oil and gas production fields has dramatically increased. Thus, the industry has now extended drilling to locations that are environmentally sensitive or with limited vehicular access (e.g., riparian areas), which appear to overlay oil and gas reserves. Traditionally, hand drilled explosives or heavy mechanized sources are used for surveying the subsurface. However, in the environmental sensitive areas, the use of explosives is restricted or banned. For those land areas that are difficult to be accessed by vehicles, the challenge of deploying the necessary equipment for producing the seismic waves is high. However, those undertaking the drilling in this area need to know where to drill in order to avoid a dry well.

Seismic data acquisition and processing generate a profile (image) of the geophysical structure of the target area. While this profile does not provide an accurate location for the oil and gas, it suggests, to those trained in the field, areas where there is a likely presence or absence of oil and/or gas. Thus, providing a high resolution image of the structures (subsurface) under the surface of the Earth is an ongoing process.

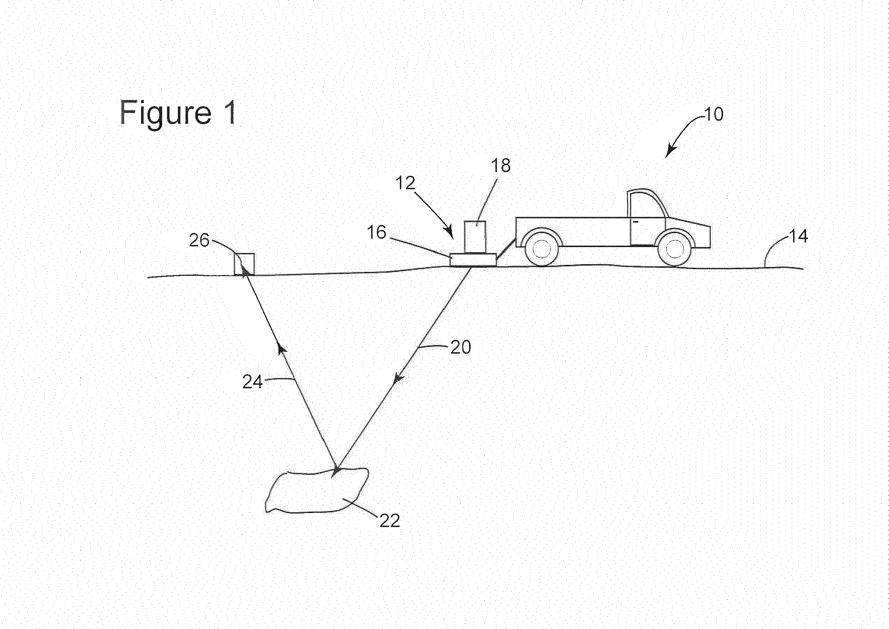

During a seismic gathering process, as shown in Figure 1, a vehicle 10 tows a seismic source 12 from location to location. At a given location as shown in Figure 1, the seismic source 12 is placed on the ground 14 such that a plate 16 is in direct contact with the ground. A mechanism 18 is actuated to drive the plate 16 towards the ground 14 so that a seismic wave is generated. The seismic wave 20 propagates down into the Earth until it is reflected by a reflector 22. Then a reflected wave 24 is generated that propagates upward toward the surface 14 of the Earth. A sensor 26 may be deployed away from the vehicle 10 or next to the vehicle 10 to measure the reflected wave 24. Based on these measurements that are taken at various locations, a profile of the reflectors 22 is determined.

However, the traditional seismic sources 12 need to be deployed by a vehicle 10 as they weigh too much to be portable. As the environmentally sensitive areas prohibit or strictly limit the access of heavy duty equipment or vehicles, the existing methods for generating seismic waves are not suitable for these areas. Alternatives sources for generating the seismic waves, e.g., explosives, may also be restricted in these areas. Thus, there is a need to develop a new seismic source that overcomes the above noted problems and drawbacks.

### SUMMARY

According to one exemplary embodiment, there is a portable seismic source for generating seismic waves or energy in the ground. The portable seismic source includes an impact generator device configured to produce impulsive energy; a casing configured to house the impact generator device; a base plate configured to be placed on the ground; and a stabilizing foot mechanism configured to be provided between the casing and the base plate. The stabilizing foot mechanism includes a stabilizer which is fixed relative to the casing and configured to be placed on the base plate and a stanchion that is configured to move relative to the stabilizer when impacted by the impact generator device and to enter through the stabilizer and apply a force on the base plate.

According to another exemplary embodiment, there is a portable seismic source for generating a seismic source underground. The portable seismic source includes a casing; a combustion chamber provided inside the casing; a piston provided inside the combustion chamber to divide the combustion chamber in a first chamber and a second chamber; compression means provided between the piston and a disk of the casing so that the piston is biased towards the first chamber; a base plate configured to be placed on the ground; and a stabilizing foot mechanism configured to be provided between the casing and the base plate. The piston is configured to prevent air from the second chamber moving into the first chamber through the piston and air from the first chamber moving into the second chamber through the piston.

According to still another exemplary embodiment, there is a method for generating a seismic wave. The method includes injecting air and fuel in a combustion chamber; igniting the air and fuel to generate a high pressure in the combustion chamber; and displacing a piston provided inside the combustion chamber to transfer momentum to a base plate via a stanchion for generating the seismic wave. The piston divides the combustion chamber in first and second chambers and the piston is configured to prevent air from the second chamber moving into the first chamber through the piston and air from the first chamber moving into the second chamber through the piston.

### BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic diagram of a conventional land seismic source;

Figure 2 is a schematic diagram of a portable seismic source according to an exemplary embodiment;

Figure 3 is a schematic diagram of a portable seismic source having a platform according to an exemplary embodiment;

Figure 4 is a schematic diagram of a portable seismic source according to another exemplary embodiment;

Figure 5 is a schematic diagram of various parts of a portable seismic source according to still another exemplary embodiment;

Figure 6 is a schematic diagram of a stabilizer mechanism of a seismic source according to an exemplary embodiment;

Figure 7 is a schematic diagram of a base plate and a stabilizer mechanism of a seismic source according to an exemplary embodiment;

Figure 8 is a flowchart illustrating a method for generating a seismic wave with a portable source according to an exemplary embodiment; and

Figure 9 is a cross-view of a portable seismic source according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a portable propane powered seismic source. However, the embodiments to be discussed next are not limited to this structure, but may be applied to other structures that need to apply a force to the ground to provide a seismic source and also be portable.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an exemplary embodiment there is a seismic source that is portable and does not require a vehicle to be carried to a desired destination. In addition, the novel seismic source does not use explosives. Thus, this novel seismic source complies with strict environmental requirements and can be transported by one or more persons to the desired location. In one application, the seismic source is a hammer that is activated by a fuel source, e.g., propane.

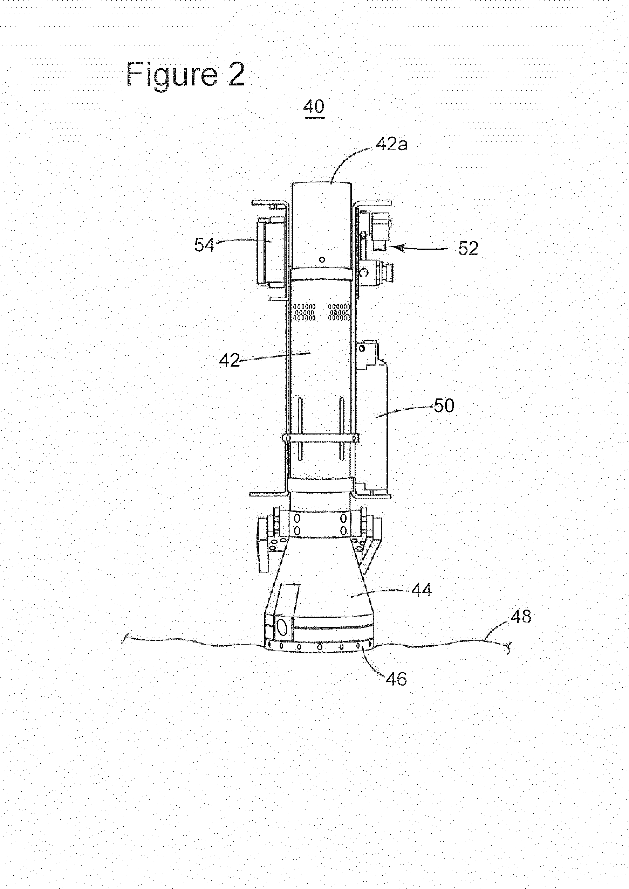

According to an exemplary embodiment shown in Figure 2, a seismic source 40 includes a casing 42, a stabilizing foot mechanism 44 and a base plate 46. The casing 42 is configured to house an impact generator device which will be discussed later. The base plate 46 is configured to be placed in direct contact with the surface 48 of the Earth. The casing 42 includes a power source and a hammer mechanism (to be discussed later) that is configured to act on the base plate 46 for generating the seismic waves. The stabilizing foot mechanism 44 is configured to keep a predetermined distance between the casing 42 and the base plate 46. The stabilizing foot mechanism 44 is provided at a lower end of the casing 42 while an exhaust and intake valve (to be discussed later) are provided at a head or upper end 42a of the casing 42.

Figure 2 also shows the power source 50 that is attached to the seismic source 40 and configured to provide fuel to a combustion chamber. The power source 50 may be a gas tank, e.g., propane tank. Depending on the impact generator device, the power source 50 may be, alternatively, a combustion source, a pneumatic source, a hydraulic source, an electrical source, etc. Thus, the impact generator device may be, alternatively, a device that generates an impact by combustion means, pneumatic means, hydraulic means, electrical means, etc. In one application, the power source 50 may be provided inside the casing 42. The fuel from the power source 50 is delivered by a gas delivery system 52 to the combustion chamber. In one application, to be discussed later, a tank of compressed oxygen may be added and provided to the ignition chamber for increasing a power provided to the impact generator device. The fuel is mixed with air and/or the oxygen source as will be discussed later and ignited by an ignition control module 54.

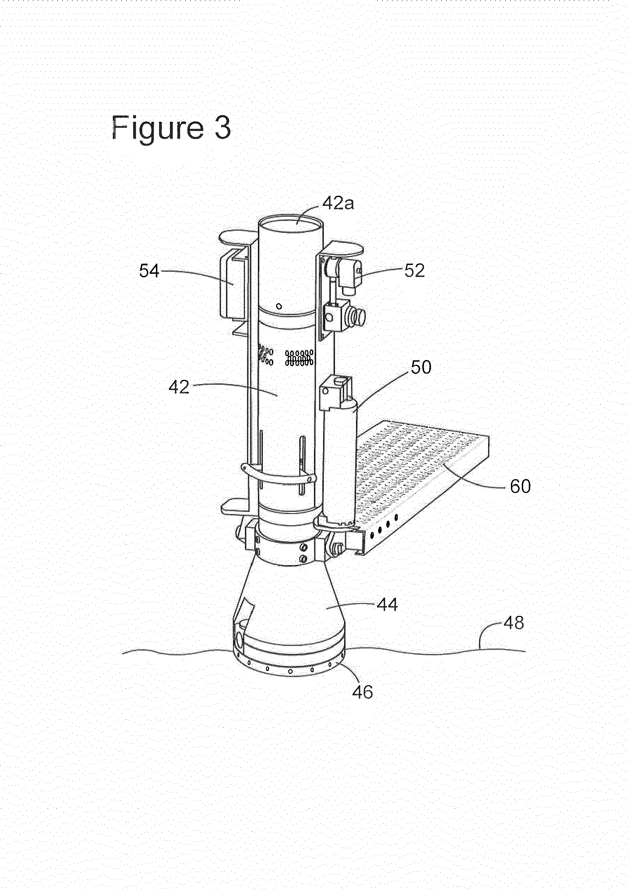

Before discussing the details of the combustion chamber and other various elements of the seismic source 40, it is noted in another exemplary embodiment shown in Figure 3 that a platform 60 may be removably attached to the casing 42. The platform 60 may be made of metal (e.g., steel) and may have multiple purposes. One purpose is to provide a base for the operator of the seismic source 40 from where to control the source. Another purpose is to increase a weight of the seismic source 40 to counter balance a recoil that is produced in the casing 42 when the fuel is burnt in the combustion chamber and a momentum is transferred to the base plate 46 in a short amount of time.

For preserving the portability of the entire seismic source 40, the platform 60 may be easily removed from the casing 42 and may be carried by another person than the person that carries the remainder of the seismic source 40. For illustrative purposes, a weight of the seismic source 40 is between 50-100lbs and a weight of the platform 60 is in the range of 5-15lbs. Thus, as the seismic source 40 may be transported by one person, and the platform 60 may be carried by another person, the novel seismic source 40 is totally portable, does not necessarily require a motorized vehicle for transportation and also does not need explosives to function. The platform 60 is foldable, i.e., may be folded from the position shown in Figure 3 to a position in which a longitudinal axis of the platform is substantially parallel to a longitudinal axis of the casing 42.

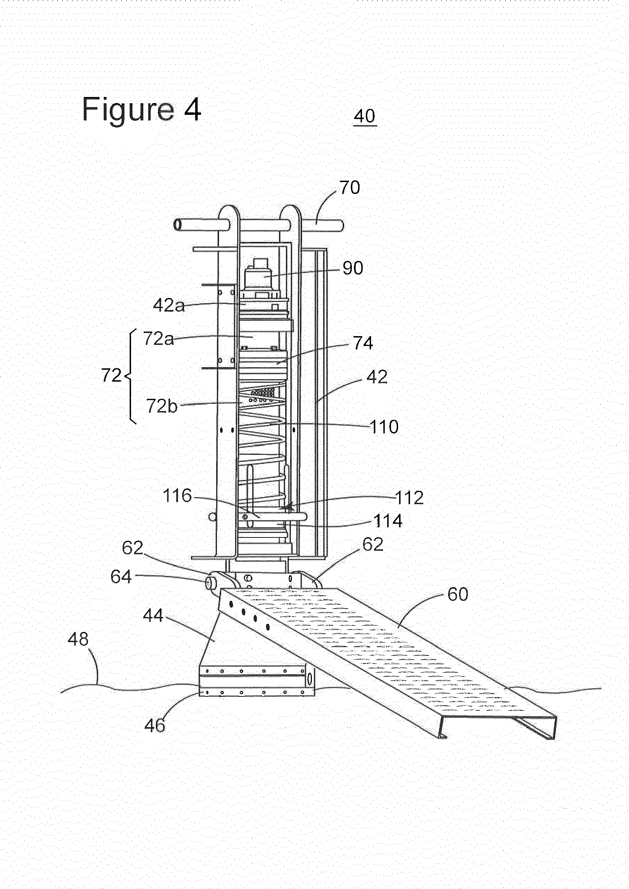

A cut-through view of the seismic source 40 is shown in Figure 4. This figure shows the platform 60 having two extensions 62 that connect to corresponding pins 64 attached to the casing 40. In this embodiment, the platform 60 is not connected to the base plate 46. The extensions 62 have cuts that fit around the pins 64. Thus, the platform 60 is easily removable from the casing 42, i.e., no screws or other fixtures or tools are necessary.

The casing 42 may be provided with a handle 70 for providing a point of stability to the operator that is on the platform 60 and operates the seismic source 40. Inside the casing 42 there is the combustion chamber 72 in which a piston 74 is provided. Piston 74 divides the combustion chamber 72 into a first chamber 72a and a second chamber 72b. Fuel is handled by the gas delivery system 52 (shown in Figures 2 and 3). The air/fuel is mixed in the first chamber 72a as discussed later. The gas delivery system 52 includes solenoid valves that are controlled by a microprocessor control circuit for opening and closing.

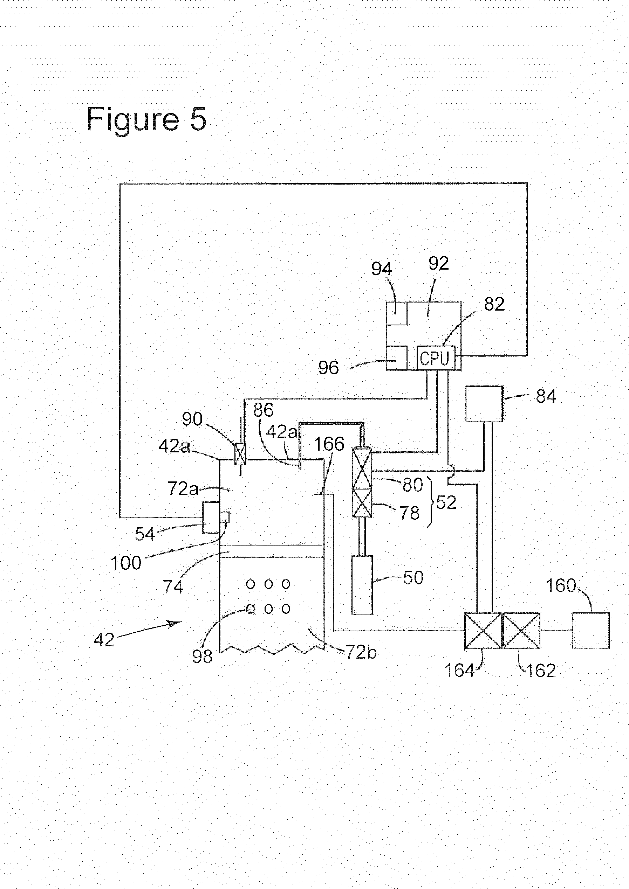

Figure 5 schematically shows the power source 50 connected to a pressure regulator 78 and a solenoid valve 80 that form the gas delivery system 52. The solenoid valve 80 is controlled by a processor 82 and is provided with an electrical current from a battery 84. The fuel is injected by nozzles 86 directly into the first chamber 72a. The air is provided via a valve 90 provided at a top of the casing 42. Valve 90 may be a solenoid valve and may be controlled to open and close by the processor 82. By opening and closing valves 80 and 90, the processor can control the combustion mixture air/fuel ratio to optimize the combustion under varying conditions. Optionally, an oxidizer tank 160 may be provided to supply an oxidizer fluid to the first chamber 72a for increasing the power produced by the ignition. The oxidizer fluid may be, for example, compressed oxygen. Similar to the power supply system, a pressure regulator 162, a solenoid valve 164 and a nozzle 166 may be used to control the flow of the oxidizer fluid into the first chamber 72a. The solenoid valve 164 may be connected to the battery 84 and also to the processor 82. Processor 82 may be part of a control module 92 that may also include a memory 94 for storing computer instructions. The computer instructions may be provided to the memory 94 via an interface 96. The interface 96 may include one or more of a port, keyboards, mouse, touch screen, etc. The control module 92 may be configured to operate the power source. For example, for a propane source, the control module 92 may be configured to compensate for ambient temperature, pressure, humidity, etc. Further, the control module 92 may be configured to control the impact generator device to perform a single impact, a plurality of impacts, a series of impacts with equal or unequal, predetermined time intervals, etc. The control module 92 may be controlled by the operator for choosing one or more of the modes discussed above. For example, a switch may be provided outside the casing 42 that selects one of the modes. Thus, the operator may simply select a desired mode by providing the switch in a corresponding position.

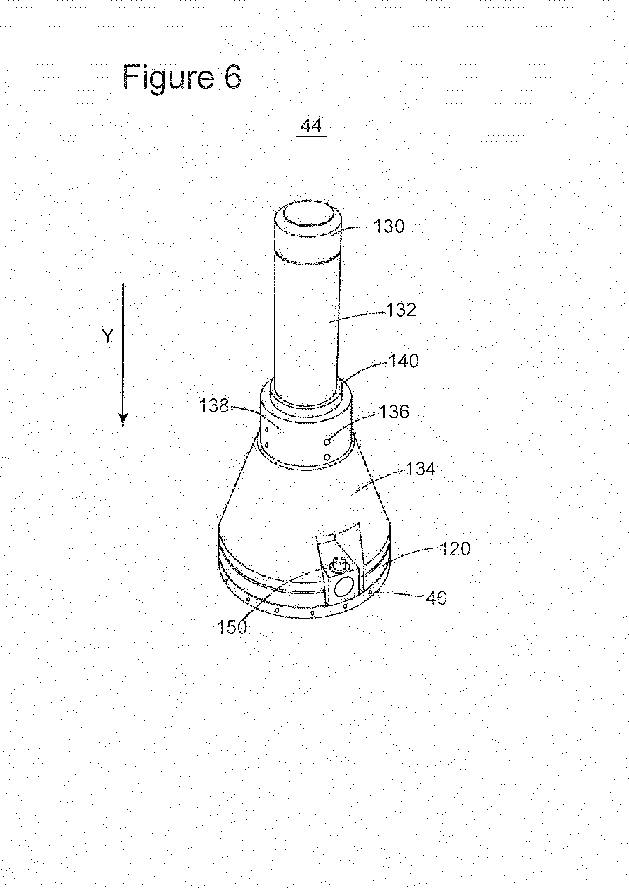

The control module may also be configured to store (e.g., memory 94) information about one or more impacts. This information may be measured, for example, by one or more sensors (see 150 in Figure 6). These sensors may be provided in the base plate. The interface 96 of the control module 92 may be configured to connect to a cable for transferring information to and from an outside seismic recorder unit. In one application, the seismic recorder unit is far away from the seismic source 40. In this case, the interface 96 may include wireless communication means (e.g., a transceiver or a transmitter) for transmitting the data to and/or receiving information from the seismic recorder unit.

In one application, both the nozzles 86 and the valve 90 are provided at the head 42a of the casing 42. Plural holes 98 are formed through the combustion chamber 72, in the second chamber 72a so that the exhaust from the burning process is released outside the combustion chamber. The ignition control module 54 is shown being connected to one or more spark plugs 100 that are in direct contact with an atmosphere inside first chamber 72a. The ignition control module 54 is also electrically linked to the processor 82. Thus, the processor 82 is able to control and coordinate the fuel supply, air intake, and the ignition of the mixture of air and fuel.

Returning to Figure 4, the position of the valve 90 is indicated at the head 42a. The piston 74 is shown in contact with a first end of a compressible means 110. The compressible means 110 may be, for example, a spring. The compressible means 110 has a second end that contacts a starting mechanism 112. The starting mechanism 112 may include a disk 114 that contacts the second end of the compressible means 110. Disk 114 is a collar/ring on which the compressible means 110 sits. Disk 114 may be a collar that freely moves up and down and is constrained from travelling towards the ground by an internal stop, e.g., a snap ring. It is noted that a top cap 130 (shown in Figure 6 and discussed later) goes through the disk 114 and is capable to move relative to the disk 114. Thus, when the device is fired, the piston 74 is accelerated downwards compressing the compressible means 110 and ultimately directly contacting the top cap 130. Using a handle 116 the user can raise and lower the piston 74 to purge the combustion chamber 72a in the case of a misfire. The valve 90 needs to be open to permit this action. Disk 114 also acts as a 'stop' for the compressible means 110 to prevent it from getting pushed out the lower end of the chamber 42. The handle 116 is attached to the disk 114 and the handle 116 is provided outside the casing 42 so that the operator of the seismic source 40 may move the disk 114 up by means of slots (see Figures 2, 3 an 4) in casing 42 to initiate the first upward stroke of the piston 74.

The stabilizing foot mechanism 44 is interposed between disk 114 and base plate 46 as discussed next. As shown in Figure 6, the stabilizing foot mechanism 44 is configured to stay on top of the base plate 46. A flexible material 120, e.g., rubber foam, may be inserted between the stabilizing foot mechanism 44 and the base plate 46. This flexible material suppresses most of the noises produced when hammering the stabilizing foot mechanism with piston 74. In other words, when piston 74 is actuated by the ignition of the fuel in the first chamber 72a, the piston 74 moves towards the stabilizing foot mechanism 44 and hits the top cap 130. Thus a more accurate seismic wave is generated by the base plate 46. The base plate 46 may be formed of aluminum and the flexible material 120 may be glued to the base plate 46.

The stabilizing foot mechanism 44 includes the top cap 130 that is configured to interact with piston 74 as noted above. The top cap 130 may be made of stainless steel. The top cap 130 continues with a stanchion 132 that may be made of aluminum. In one application, the top cap 130 is fixedly attached to the stanchion 132. The stanchion 132 together with top cap 130 may freely move through the ring 114. The stanchion 132 is configured to enter a stabilizer 134 that may be made of aluminum. The stabilizer 134 is configured to be optionally attached to the casing 42. For example, screws may be inserted through the tail end of the casing 42 into holes 136 formed in a neck portion 138 of the stabilizer 134. Alternately, the weight of the operator standing on platform 60 can be employed to hold the casing 42 in contact with the stabilized 134. The stanchion 132 is configured to slide along direction Y relative to the stabilizer 134.

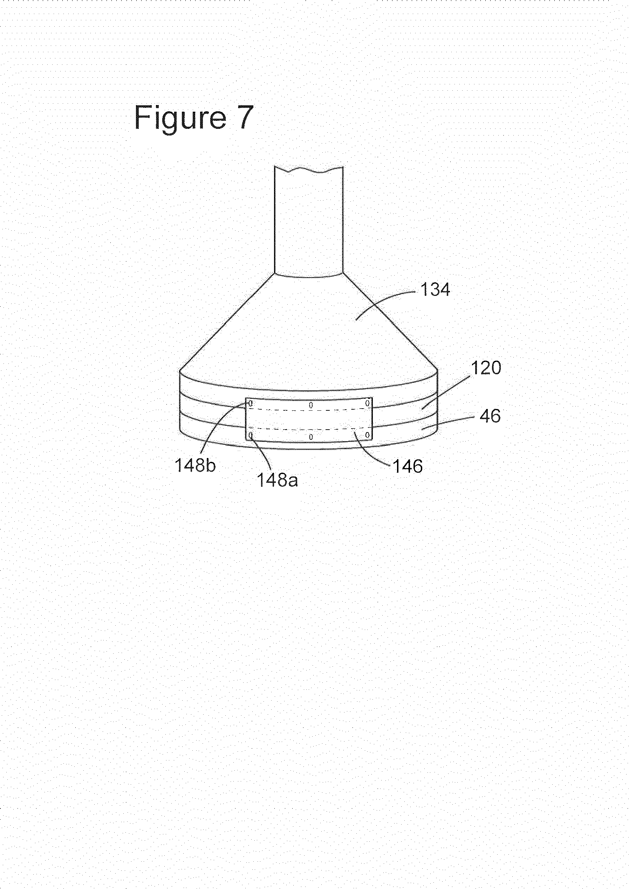

For reducing a frictional force between the stanchion 132 and the neck portion 138 of the stabilizer 134, a sleeve 140 may be provided inside the neck portion 138. The sleeve 140 may be made of Ultra-high-molecular-weight polyethylene (UHMW). The stanchion 132 is welded or attached by other means to the base plate 46. For maintaining the base plate 46 next to the flexible material 120, a skirt 146, as shown in Figure 7, may be provided between the base plate 46 and a bottom portion of the stabilizer 134. Other means may be used for keeping these elements together in a loose manner, as will be discussed later. The skirt 146 may be made of a textile material and it is attached by screws or bolts or pins 148a and 148b on both the base plate 46 and the bottom portion of the stabilizer 134. By being made of a textile material or other elastic material, the activation of the stanchion 132 and base plate 46 do not pull the casing 42 along the Y direction. The skirt 146 may be removed so that the base plate 46 can be detached from the stabilizer 134. The stabilizing foot mechanism 44 may also include, as shown in Figure 6, a sensor 150 mounted to the base plate 46 for detecting an exact moment when the piston 74 strikes the base plate 46 and also to determine a 'source signature' - or force signature - of the signal that will be transferred to the ground. This could be accomplished by either one (1) or two (2) sensors. The sensor 150 may be electrically connected to the processor 82 shown in Figure 5 so that data may be recorded in the memory 94.

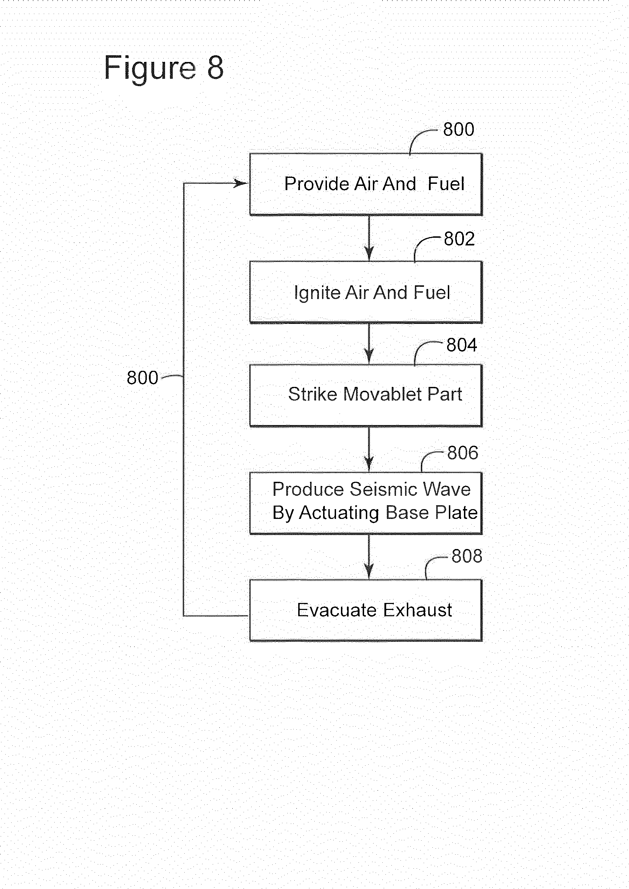

An operation of the portable seismic source 40 is now discussed with reference to Figure 8. In step 800, fuel and air is provided in the first chamber 72a. The fuel intake is controlled by the solenoid valve 80 and the air intake is controlled by valve 90. The mixture of air and fuel is then ignited in step 802 by the ignition control module 54. The burning of the mixture in the first chamber 72a produces a sudden increase in pressure and thus, the piston 74 moves along the Y (vertical) direction with a predetermined force that is dictated by the size of the combustion chamber, the type of fuel, the amount of air, etc. The piston 74, by moving downwards, strikes in step 804 the top cap 130 of the stabilizing foot mechanism 44.

The stanchion 132, by moving downward under the momentum from the top cap 130, forces the base plate 46 to be driven downwards on the ground and so produces a seismic wave in step 806. The exhaust produced by the burnt fuel is primarily evacuated from the combustion chamber through holes 98 in step 808. The exhaust is also evacuated when the piston 74 moves upwards, in the negative direction of the axis Y. This secondary evacuation takes place through the valve 90 and is coordinated by processor 82. Air is inserted into the chamber 72a through the valve 90 which acts as a dual purpose air/exhaust port. The intake of air may be naturally aspirated or a mechanism for achieving forced air to assist in the evacuation of exhaust from the chamber above 42a may be used. This mechanism may include the use of compressed air or a fan. The secondary evacuation is enhanced by the piston 74 moving upward under the bias provided by the compressible means 110. In this regard, it is noted that the compressible means 110 were compressed when piston 74 moved downwards. In step 810, the process is repeated for as long as the operator desires, or as programmed into the control circuit.

The following features of the seismic source are noted. The piston 74 does not have an internal valve and there is no mechanical means inside the first chamber 72a that is activated by piston 74 for allowing the air and/or fuel to enter the first chamber 72a. The platform 60 attaches to the casing 42 and not to the base plate 46. There is a regulator 78 that maintains the pressure of the fuel at a predetermined level when the pressure in the power source 50 decreases. The seismic source 40 may be considered to act as a hammer, i.e., the piston 74 moves downwards to hit top cap 130 similar to a hammer hitting the head of a nail. This hammer action may be controlled by the operator to be continuous or in series, i.e., with a controlled time interval between two hammer actions. This interval is programmed into the control circuit.

One or more of the exemplary embodiments discussed above advantageously provides a seismic source that exhibits a cycle time for 100 hits per 60 s, or maximizes an energy transfer between the piston, base plate and the ground, or improves a bandwidth of the signal to be about 75% of a typical hand drilled dynamite slot, or maintains a low weight so that the whole assembly may be carried by one or two persons, or eliminates secondary events. According to an exemplary embodiment a weight of the whole assembly may be around 50 kg and an average cycle time may be about 600-1000 ms.

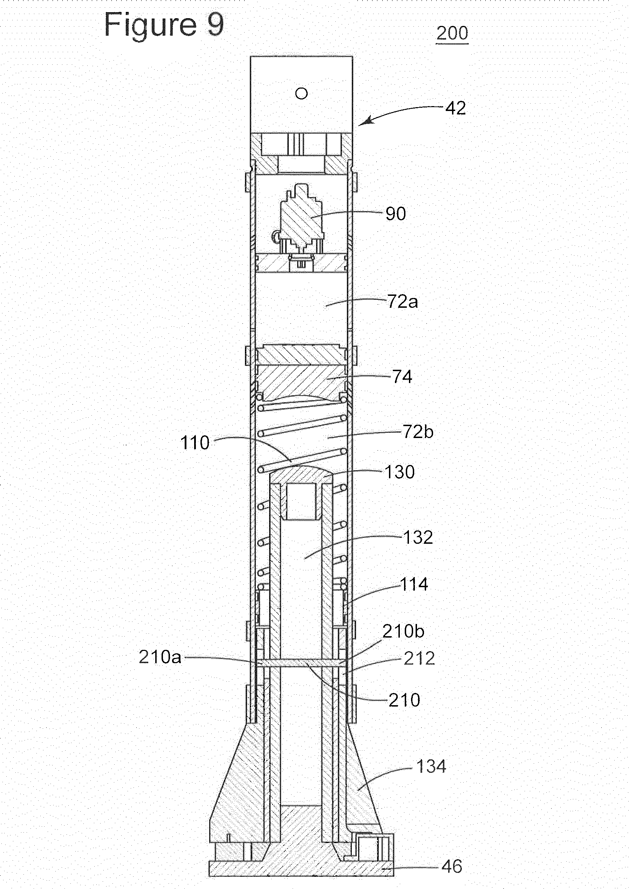

A cross-section view of a fully assembled portable seismic source 200 is illustrated in Figure 9. It is noted that the portable seismic source 200 includes the casing 42, the valve 90, the piston 74 that separates the first chamber 72a from the second chamber 72b, the compressible means 110, the disk 114, the top cap 130, the stanchion 132, the stabilizer 134, and the base plate 46. This portable seismic source 200 has a pin 210 that goes through the stanchion 132 and the ends 210a and 210b of the pin 210 ride up and down in slots 212 formed in the stabilizer 134. Thus, the base plate 46 does not need the skirt 146 shown in Figure 7 as the base plate 46 is now attached to the stanchion 132.

The disclosed exemplary embodiments provide a portable system and a method for generating a seismic source that propagates underground. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A portable seismic source (40) for generating seismic waves or energy in the ground, the portable seismic source comprising:
an impact generator device (74, 80, 82, 92) configured to produce impulsive energy;
a casing (42) configured to house the impact generator device (74, 80, 82, 92);
a base plate (46) configured to be placed on the ground; and
a stabilizing foot mechanism (44) configured to be provided between the casing (42) and the base plate (46),
wherein the stabilizing foot mechanism (44) includes a stabilizer (134) which is fixed relative to the casing (42) and configured to be placed on the base plate (46) and a stanchion (132) that is configured to move relative to the stabilizer (134) when impacted by the impact generator device (74, 80, 82, 92) and to enter through the stabilizer (134) and apply a force on the base plate (46).

2. The portable seismic source of Claim 1, further comprising:
a flexible material provided between the stabilizer and the base plate.

3. The portable seismic source of Claim 2, further comprising:
elastic means configured to maintain the base plate attached to the stabilizer.

4. The portable seismic source of Claim 1, further comprising:
a pin extended through the stanchion and into the stabilizer.

5. The portable seismic source of Claim 1, further comprising:
a top cap provided on top of the stanchion; and
at least one sensor attached to the stabilizer and configured to measure a time of contact between a piston and the top cap and/or a force signature of the impact.

6. The portable seismic source of Claim 1, wherein the impact generator device is one of a pneumatic activated device, a hydraulic activated device, a propane activated device, or an electrical activated device.

7. The portable seismic source of Claim 1, further comprising:
a combustion chamber provided inside the casing;
the impact generator device includes a piston provided inside the combustion chamber to divide the combustion chamber into a first chamber and a second chamber; and
compression means provided between the piston and a disk of the casing so that the piston is biased towards the first chamber,
wherein the piston is configured to transfer momentum to the stanchion when an ignition occurs in the first chamber.

8. The portable seismic source of Claim 7, wherein the impact generator device further comprising:
a first valve configured to control an amount of fuel provided to the first chamber;
a second valve configured to control an amount of air provided to the first chamber;
an ignition control module configured to ignite the fuel inside the first chamber;
and
exhaust holes provided in the second chamber and configured to release exhaust gases in the atmosphere around the portable seismic source.

9. The portable seismic source of Claim 8, further comprising:
a control module configured to control a timing of the first valve, the second valve and the ignition control module.

10. The portable seismic source of Claim 8, further comprising:
a power source connected to the first valve,
wherein the control module is configured to control an operation of the source.

11. The portable seismic source of Claim 9, wherein the control module is configured to compensate for ambient temperature, pressure, humidity and to perform a single impact, multiple impacts, a series of impacts with equal intervals, or a series of impacts with variable intervals.

12. The portable seismic source of Claim 9, wherein the control module is configured to communicate data to and/or receive data from a seismic recorder unit by cable or wireless.

13. The portable seismic source of Claim 1, further comprising:
a platform configured to be detachably attached to the casing, wherein the platform is also configured to support a weight of a person operating the seismic source.

14. A portable seismic source (40) for generating a seismic source underground, the portable seismic source (40) comprising:
a casing (42);
a combustion chamber (72) provided inside the casing (42);
a piston (74) provided inside the combustion chamber (72) to divide the combustion chamber (72) in a first chamber (72a) and a second chamber (72b);
compression means (110) provided between the piston (74) and a disk (114) of the casing (42) so that the piston (74) is biased towards the first chamber (72a);
a base plate (46) configured to be placed on the ground; and
a stabilizing foot mechanism (44) configured to be provided between the casing (42 and the base plate (46),
wherein the piston (74) is configured to prevent air from the second chamber (72b) moving into the first chamber (72a) through the piston (74) and air from the first chamber (72a) moving into the second chamber (72b) through the piston (74).

15. A method for generating a seismic wave, the method comprising:
injecting air and fuel in a combustion chamber;
igniting the air and fuel to generate a high pressure in the combustion chamber; and
displacing a piston provided inside the combustion chamber to transfer momentum to a base plate via a stanchion for generating the seismic wave,
wherein the piston divides the combustion chamber in first and second chambers and the piston is configured to prevent air from the second chamber moving into the first chamber through the piston and air from the first chamber moving into the second chamber through the piston.
